Europäisches Patentamt

European Patent Office

Office européen des brevets

(11) Publication number: **0 112 694**
**A1**

(12) **EUROPEAN PATENT APPLICATION**

(21) Application number: **83307631.8**

(51) Int. Cl.³: **B 62 D 25/18**

(22) Date of filing: **15.12.83**

(30) Priority: **21.12.82 GB 8236328**

(43) Date of publication of application: **04.07.84**
**Bulletin 84/27**

(84) Designated Contracting States: **DE FR IT NL**

(71) Applicant: **Netlon Limited, Kelly Street Mill Hill, Blackburn Lancashire (GB)**

(72) Inventor: **Mercer, Frank Brian, "Kenolbri" Meins Road, Blackburn Lancashire (GB)**
Inventor: **Fairclough, Stanley, 42, Park Road, Wigan Lancashire (GB)**

(74) Representative: **Lyndon-Stanford, Edward Willoughby Brooke et al, Marks & Clerk 57/60 Lincoln's Inn Fields, London WC2A 3LS (GB)**

(54) **Vehicle spray inhibitor.**

(57) In order to reduce the bulk, weight and cost of a vehicle spray inhibitor (4) while maintaining the performance or improving the performance, the inhibitor (4) has an inlet layer (6) formed of parallel, triangular-shaped inlet elements (8) with the apices of the triangles facing forwards. Behind the inlet layer (6), there is an energy absorbing layer (7) formed of bi-planar diamond mesh and a spacer layer (12). Each respective layer can be formed by the integral extrusion of plastics material mesh. The layers are attached to an impermeable backing such as a mud-flap (3).

0112694

1

# VEHICLE SPRAY INHIBITOR

## Background of the Invention

The present invention relates to a vehicle spray inhibitor for attachment to a vehicle adjacent a wheel for reducing spray from the wheel, the inhibitor comprising an inlet layer spaced in front of a water-impermeable backing, the inlet layer having inlet elements with gaps between them through which spray will pass. The inhibitor of the invention can be applied to rigid parts of the vehicle, such as the mudguard, wing (fender) or wheel arch, and/or to flexible parts such as the mud flaps. The inhibitor will have its inlet side facing the wheel and its function is to inhibit or eliminate spray which would otherwise be created when the vehicle is driven over wet surfaces, for example at a relatively high speed along a motorway.

It appears that most of the spray generated by vehicles is caused by water thrown up from the wheel rebounding from for instance the mudguard and being broken up into very fine particles.

It is believed that legal standards may be imposed, giving strict requirements for the containment of water thrown up from the wheels of in particular heavy vehicles, and for allowing the water to drain away in a controlled fashion.

There are however considerable problems. Some estimates suggest that up to 300 litres of water can be thrown up per minute by a single lorry wheel. Ideally all the energy of this water should be absorbed and the water allowed to drain away in a controlled fashion. The inhibitor should not be very bulky as the space between the wheel and the mudguard or wheel arch is limited, it should not be very heavy, it should not be easily clogged, it should be sufficiently rigid to maintain its shape at high speed, particularly if it is being used in conjunction with a mud flap, and it should not be susceptible to rupture in cold weather or for instance when stones are thrown at it by the wheel.

A vehicle spray inhibitor of this type has been proposed in GB 2 100 206A, but it is found that it is relatively bulky and heavy, and relatively expensive. In addition, a large amount of water passes out forwards between the inlet elements, causing a significant amount of spray.

DE-U-6 606 116 discloses a vehicle spray inhibitor. The disclosure is not clear, but it appears that the inlet elements may be parallel and have a V cross-section, with narrow leading edges. The intention is that the inlet elements should be inclined to the air stream direction, passing water and dirt to the backing in a compact form, without substantially impeding the air stream. There are inclined vanes towards the bottom of the space between the inlet elements and the backing, for stripping off or removing the water in compact streams. It is believed however that the spray caused by the impact of the water on the backing will cause a considerable amount of water to pass forwards out between the inlet elements, causing very significant spray.

DE-U-1 936 841 discloses an apertured mud-flap with no water-impermeable backing. There is no intention of decelerating the water flow and passing the water down onto the road surface. However, one of the embodiments shows elliptical-section ribs used as inlet elements. This arrangement would be ineffective as a vehicle spray inhibitor.

It is desirable to reduce the amount of spray produced, but even with the same amount of spray reduction, it is desirable to reduce the bulk, weight and cost of the inhibitor.

The Invention

The present invention provides a vehicle spray inhibitor as set forth in Claim 1 and extends to the vehicle set forth in Claim 20. The remaining Claims set forth preferred features of the invention.

The front side of the inlet layer presents very litte impediment to the movement of the water, and the water will pass freely in between the inlet elements, at least at their front side. However, the spaces between the widest parts of the inlet elements are considerably less than the spaces between the front sides of the inlet elements; this impedes the movement of water back out between the inlet elements. The energy absorbing means behind the inlet elements greatly reduces the amount of water which rebounds with sufficient energy to pass out through the gaps between the inlet elements.

It has been found that the inhibitor of the invention is not easily clogged and is largely self-cleaning. Clogging may occur at slow speeds, particularly when driving through soft mud, but the mud can be washed out when going faster.

The inhibitor of the invention can be arranged to be relatively thin, and to be correspondingly light. Thus a preferred construction has a total thickness of about 20 mm.

The inhibitor can be designed so as not to become brittle in cold weather, and can have a reasonable resistance to projected stones.

In view of the multi-layer construction, sufficient rigidity can be provided to allow the backing to be in the form of a rubber or plastic mud-flap, without complete loss of geometry at high speeds. The inhibitor ─────────────────────────────

4

can meet a design requirement of not deflecting more than 100 mm at a speed of 100 Km/h.

It is preferred that each inlet elements should extend in a plane normal to the wheel axis, i.e. vertically. It is easier to make the inlet elements all identical and all at the same orientation relative to the plane of the inhibitor. The inhibitor is normally in a vertical plane. Thus water can hit the top part of the inhibitor when rising at a large angle to the horizontal. If the inlet elements were horizontal, the water could hit their exposed surfaces at 90°, which is undesirable; nonetheless, it would be possible to have the inlet elements at different orientations to the plane of the inhibitor so that the topones were inclined relatively sharply downwards, it also being possible to alter the pitch so that the pitch of the top ones was greater than the pitch of the bottom ones. In a further possibility, the inlet elements could be vertical, but backed by a layer of horizontal elements, like louvres, at different orientations to the plane of the inhibitor. In practice, it is found difficult to form a second layer of suitably shaped elements. It is also found difficult to interconnect the inlet elements with suitably shaped cross-elements though relatively widely-spaced flat elements can be used for such interconnection.

In practice, the preferred shape for the inlet elements is triangular and roughly triangular shapes can be achieved without difficulty in mass production. However, in theory, it may be possible to curve the cross-section to achieve a better effect, in particular to remove more energy from the water as it passes between the inlet elements - it is believed best to have flat or smoothly curved surfaces.

Preferred Embodiments

The invention will be further described, by way of example, with reference to the accompanying drawings, in which:-

Figure 1 is an isometric projection, showing vehicle spray inhibitors in accordance with the invention, mounted adjacent wheels of a vehicle;

Figure 2 is a side view, corresponding to Figure 1, but showing just one wheel;

Figure 3 is an isometric projection, on a larger scale and exploded, of part of a first embodiment of the inhibitor;

Figures 4a to 7 are sections, on a yet larger scale,

6

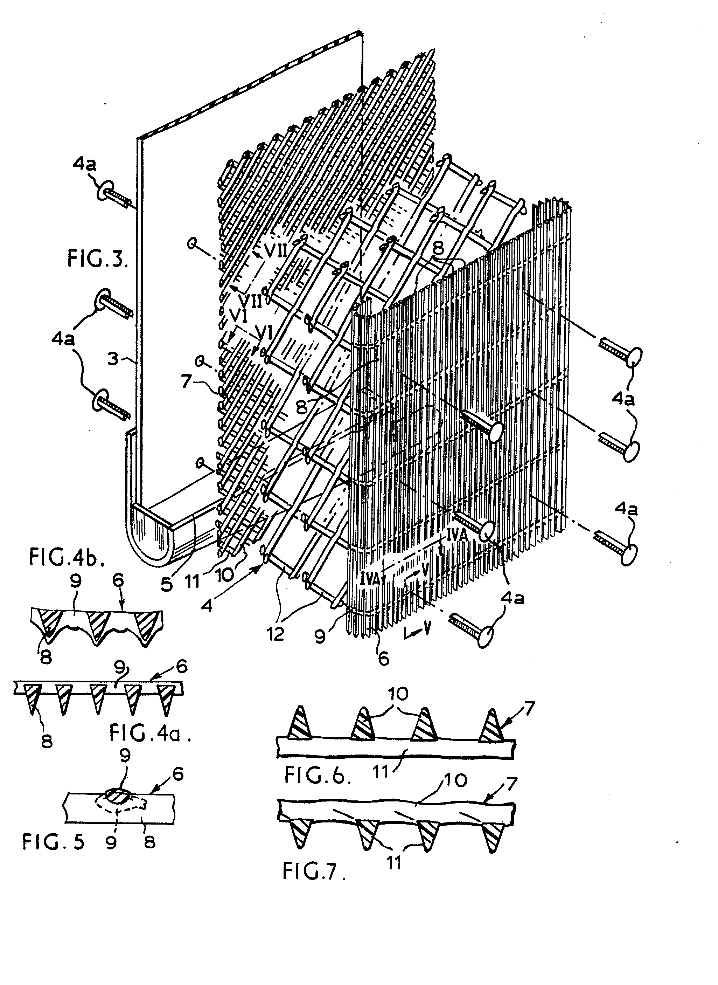

along the planes indicated conventionally in Figure 3;

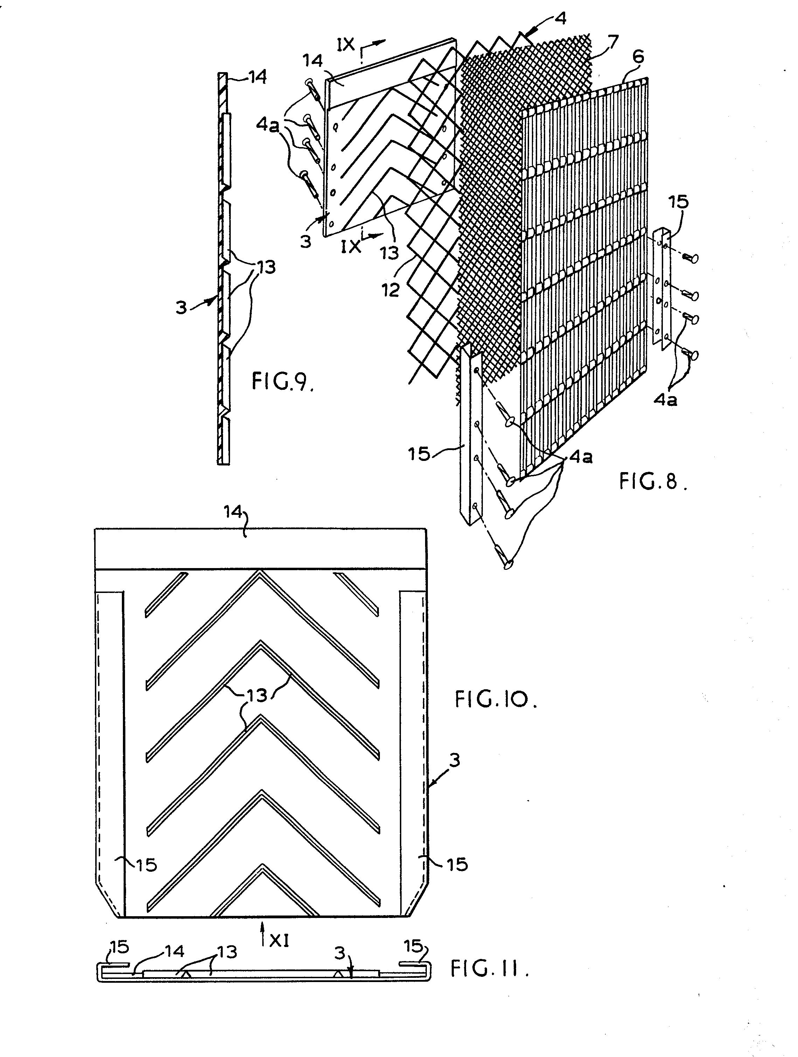

Figure 8 is an isometric projection corresponding to Figure 3, but showing part of a second embodiment of the inhibitor;

Figure 9 is a section, on a yet larger scale, along the plane IX-IX in Figure 8;

Figure 10 is a front view of an improved mud-flap for the embodiment of Figures 8 and 9; and

Figure 11 is a view looking in the direction of the arrow XI in Figure 10.

### Figures 1 and 2

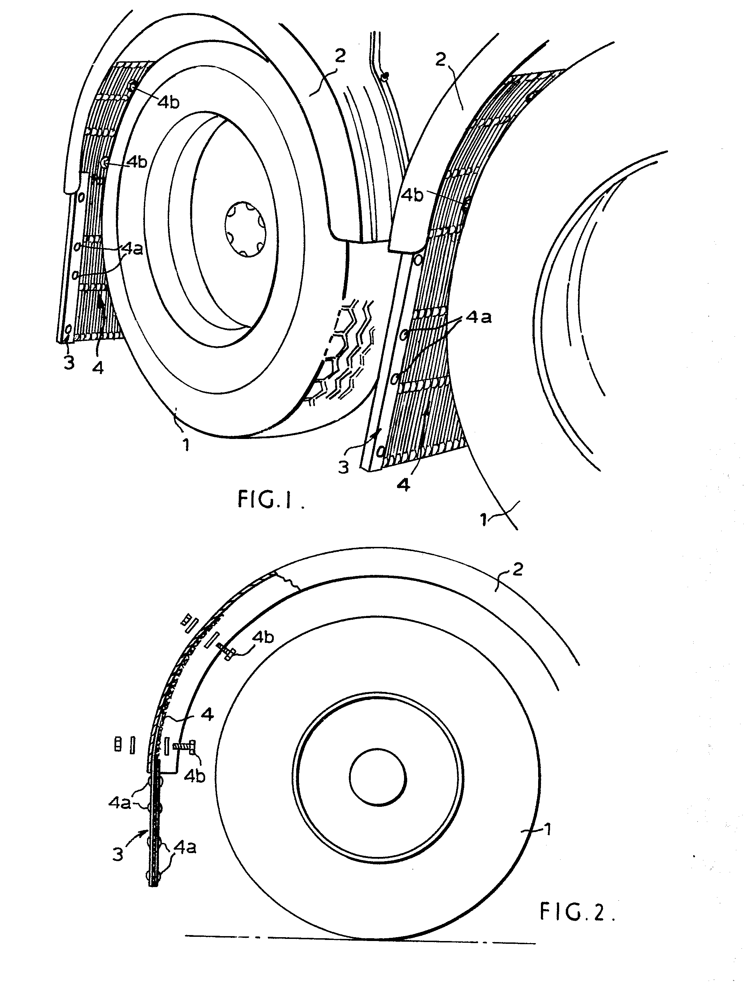

Figure 1 shows typical lorry (truck) wheels 1 below mudguards 2 furnished with mud-flaps 3 in the form of solid rubber or plastic sheets. A vehicle spray inhibitor 4 in accordance with the invention (which can be called a spray suppressor) is secured to each mud-flap 3 - the mud-flap 3 acts as a water-impermeable backing (and once in position, forms part of the inhibitor 4). Any suitable mounting means can be used to secure the spray inhibitor 4 to the mud-flap 3. Simple bolts, plastics snap rivets, or other fasteners 4a can extend front-to-rear and hold the inhibitor 4 layers securely to the mud-flap 3; additional fasteners 4b secure the upper part of the inhibitor 4 to the mudguard 2. It is convenient to supply the inhibitor 4 together with the water-impermeable mud-flap 3, the inhibitor being secured to the mud-flap 3.- the inhibitor 4 can then be mounted on the mudguard 2 in place of the normal mud-flap. However this is not essential, and the inhibitor 4 could be supplied without the mud-flap 3, for attachment to a mud-flap 3 which may already be on a vehicle.

The normal arrangement is that the mudguard 2 should extend down at least to the level of the axis of the wheel 1, though this depends upon the diameter of the wheel 1. If suitable, the inhibitor 4 can extend a long way up into the mudguard 2 or a separate spray inhibitor can be provided. Normally, the inhibitor 4 will extend to a height 100 mm above the axis of the wheel 1, and a useful arrangement is to have an inhibitor height (uncurved) of 1000 mm and a mud-flap height of 600 mm. It is believed that the spray would not be greatly reduced by taking the inhibitor 4 up over the top of the wheel 1 as water would tend to fall back onto the wheel. The mud-flap 3 can terminate relatively close to the road surface, for instance can terminate about 150 mm to 200 mm from the road surface.

8

It is found that the incorporation of a valance further reduces spray by reducing the spray thrown directly out sideways by the wheel 1. However, there does not seem to be a great advantage in applying a spray inhibitor to the valance.

## Figures 3 to 7

These Figures show that a channel or gutter 5 can be secured below the spray inhibitor 4, for collecting water and discharging it sideways of the wheel 1 so that a following wheel does not pick up the same water. The gutter 5 can be applied to the embodiment of Figures 8 to 11, but it is not essential.

The spray inhibitor 4 is formed of two important layers, namely an inlet layer 6 and an energy absorbing layer 7. These two layers 6,7 are spaced apart as explained below. The sides of the layer 6 can be curved around to form the vertical sides of the inhibitor 4.

The inlet layer 6 is formed by a large number of spaced, parallel inlet elements 8. For instance, there may be fifty to a hundred inlet elements 8 spaced across a 0.5 m wide spray inhibitor 4. In general terms, each inlet element 8, as seen in cross-section (Figure 4a or 4b), has a front, i.e. inlet, side which is substantially narrower than its maximum width. In the case illustrated, the front is approaching zero width, being pointed and rounded right at the end, and this is preferred. More particularly, the inlet elements 8 are substantially triangular in cross-section, the apex of the triangle (ignoring terminal rounding) being about 40° to about 50°, i.e. an acute angle which is roughly half a right angle. The rear sides of the inlet elements 8 are substantially flat and are substantially parallel to the plane of the inlet layer 6. The maximum width, as seen in cross-section, of each inlet element 8 is substantially at its rear side.

The inlet elements 8 must be sufficiently close to be effective, i.e. to hold back a good proportion of the forward moving water that reaches the inlet layer 6 and thus substantially impede movement of water out forwards between the inlet elements 8. The "cover" of the inlet elements 8, and more particularly the cover of the rear sides of the inlet elements 8, can be about 50%, i.e. the widths of the rear sides being about equal to their distances apart (the gaps) - more generally, the cover is preferably less than 70% or 60% and more than 30% or 40%. Though it may be possible to scale up the inlet elements and their spacing, it is preferred to have them closely spaced; thus it is believed to be best to have a gap between 2 and 9 or 10 mm (and roughly equal to the width of the element); better results seem to be achieved with gaps of not more than 7 mm, preferred values being about 6 mm, which appears to be the most efficient, or about 3 or 3.5 mm, which is easier to manufacture.

The inlet elements drawn in Figure 4b had an average pitch of 6.5 mm and an average gap of 3.1 mm, the cover being about 52%. The average height was 3.6 mm and the average apex angle (measured as the angle included between the sides, as the apex was rounded) was 43°.

The inlet elements 8 are kept spaced apart and roughly parallel by cross-elements 9, an 80 mm pitching being a suitable compromise between keeping the inlet elements 8 stiff enough and not having too many cross-elements 9. The inlet elements 8 and cross-elements 9 can be integrally extruded from high density polyethylene using a process in accordance with GB 836 555, GB 1 250 478 or US 3 349 434. Figures 4a and 5 are idealised Figures representing the way in which the extrusion dies were cut, the mesh being nominally a bi-planar mesh; however in practice the cross-elements 9 are found to be displaced into the plane of the inlet elements 8, as indicated in Figure 4b and dashed in Figure 5, though the front sides of the ————————————————

cross-elements 9 are mainly behind the front sides of the inlet elements 8.

The energy absorbing layer 7 is formed of two sets of parallel elements or strands 10,11 which cross each other at an included angle of about 70°, being inclined at equal and opposite angles to the vertical, i.e. to the plane normal to the wheel axis. The strands 10,11 may be roughly triangular in shape; the main advantage of this is that the thickness can be greater for the same amount of material; however, the front set of strands has its apices facing forwards, so there will be some spray reduction - it is difficult to have the apices of both sets of strands facing forwards.

The strands 10,11 have a width of 1-1.5 mm and a height of 1.5 to 2 mm, i.e. are relatively thin, though this is not essential. The pitch is about 3 mm. The middle lines of the strands 10,11 lie in spaced, parallel planes. The layer 7 can be formed by integral extrusion of a bi-planar diamond mesh structure using an expanded low, medium or high density polyethylene, a suitable method being that disclosed in GB 836 555.

In this way, the layer 7 provides two sets of drainage channels, extending downwards and angled outwards. An advantage of this is that the water flow is spread

12

outwards, helping the layer 7 to cope with the large amounts of water which can be thrown up.  Also, drainage channels in one direction are left free even if a layer of mud adheres to the mud-flap 3.  In general terms, it is preferred that the spray inhibitor 4 should be approximately double the width between the innermost and outermost edges of the tread of the wheel 1 - if there are multiple wheels, the inhibitor 4 should be correspondingly wider, i.e. projecting out on each side by half said width.  A typical wheel 1 having a tyre tread width of about 200 mm could be associated with a spray inhibitor 4 whose width is 400 mm to 500 mm.  Using the bi-planar arrangement of the layer 7, it is found that the major part of the water flows down as narrow streams within the layer 7.

The layers 6,7 are spaced apart by at least one spacer layer 12 of integrally extruded diamond mesh structure made from for instance low, medium or high density polyethylene.  The meshes are roughly square and are wide, having a pitch of for instance 40 to 100 mm, preferably around 50 to 60 mm.  The strands should have a large front-to-back dimension and are relatively thick, having a thickness of 3 to 8 mm, preferably around 4 to 5 mm.  By extruding a bi-planar mesh, for instance using the method of GB 836 555, the spacing is greater than the thickness of the individual strands, the ———————————————————————————

intersections having a thickness around 50% greater than that of the strands. A diamond mesh is preferred as this gives good support to the inlet layer 6. By using the mesh structure 12, support is given to the inlet layer 6 at positions spaced across its surface, enabling the inlet layer 6 to be of relatively light construction.

The purpose of the spacer layers 12 is to hold the inlet layer 6 away from the energy absorbing layer 7, and the number of spacer layers 12 that are used depends upon the thickness of each layer 12 and convenience in manufacture and assembly. It is found that with the thicknesses referred to above, one or two layers 12 are best - although more layers give greater spacing, there is no significant reduction inspray and the bulk, weight and cost of the spray inhibitor 4 are increased. The mesh size should be as large as possible, provided adequate support is given to the inlet layer 6. Ideally, the strands of the mesh layers 12 should be superimposed; however, in practice, the meshes are not regular and no particular attempt is made to superimpose the strands. The strands shown in the drawings are roughly circular. It is appreciated that triangular-profile strands, like the inlet elements 8, could improve performance somewhat, but circular strands are found satisfactory.

The spray inhibitor 4 described above has only four (or three) layers, apart from the backing or mud-flap 3, and can have a thickness of about 20 mm. However, the efficiency is as good as or better than that of vehicle spray inhibitors known to the inventors.

Figures 8 and 9

In general, the same references are used as in Figures 3 to 7 for those items which are the same or similar. The inhibitor 4 of Figures 8 and 9 is fundamentally made up of the same layers 6,7 and 12 as the inhibitor 4 of Figures 3 to 7, but in this case, the energy absorbing layer 7 is directly behind and supports the inlet layer 6; the spacer layer 12 acts as spacing means to maintain a space between the energy absorbing layer 7 and the mud-flap 3. The inlet layer 6 and the spacer layer 12 can be exactly as described above in relation to the embodiment of Figures 3 to 7. However, the energy absorbing layer 7, though in general terms as described above in relation to the embodiment of Figures 3 to 7, preferably has strands 10,11 extruded from rectangular slots whose width is greater than their depth. In a preferred arrangement, the strands 10,11 have a pitch between 4 and 10 mm, e.g. 8 mm, a strand width of 1 to 3 mm, e.g. 2 mm, and a strand height of 1 to 3 mm, e.g. 1.5 mm.

0112694

15

The mud-flap 3 can be plain, but it is preferred to form it with ribs 13 which provide elements inclined to the vertical and to the horizontal, for causing the water to move sideways and downwards as it drains down the mud-flap 3; there are two sets of ribs 13 meeting in the central vertical plane of the mud-flap 3, each set being inclined downwards and outwards towards the side of the mud-flap 3. The ribs 13 terminate short of the side of the mud-flap 3, e.g. 70 mm short, to leave a larger gap for draining the water downwards. The ribs 13 are preferably inclined at 45° to the horizontal, are 6 mm deep and are on a pitch of 80 mm. The ribs 13 have the additional effect of reinforcing and stiffening the mud-flap 3. The mud-flap 3 can be moulded in rubber. As shown in Figure 8, the mud-flap 3 can have a thickening 14 along its top, and can be bolted to the mudguard 3 in the same way as a normal mud-flap.

Ideally, the energy absorbing layer 7 should be spaced behind the inlet layer 6 and there should be as large a space as possible between the mud-flap 3 and the energy absorbing layer 7. However, practical requirements limit space, and it has been found better to provide all the empty space behind the energy absorbing layer 7.

In laboratory testing simulating a vehicle speed of 100 Km/h with the inlet elements 8 spaced apart by 3.5 mm, 68 to 75% (depending upon precise conditions) of water jetted onto the spray inhibitor 4 was discharged down through the inhibitor 4, a fine mist coming back out between the inlet elements 8, together with some heavy droplets. Compared to vehicles without spray inhibitors, these percentage retentions give considerable reduction in vehicle spray, giving greatly improved visibility for following and overtaking vehicles, and also giving improved rear visibility for the driver of the vehicle in question.

To form the sides of the inhibitor 4, rubber side channels 15 can be employed, preventing loss of water sideways from the lower part of the inhibitor 4.

## Figures 10 and 11

Figures 10 and 11 illustrate that the side channels 15 can be moulded integrally with the remainder of the mud-flap 3.

M&C FOLIO: 44851                    WANGDOC: 0102R

Claims

1.    A vehicle spray inhibitor 4 for attachment to a
vehicle adjacent a wheel 1, for reducing spray from the
wheel, the inhibitor comprising an inlet layer 6 spaced
in front of a water-impermeable backing 3, the inlet
layer having inlet elements 8 with gaps between them
through which spray will pass, characterised in that
each inlet element, as seen in cross-section, has a
front side which is substantially narrower than the
maximum width of the element, the maximum width being
nearer the rear than the front of the element, in that
the inlet elements are sufficiently close to each other
to substantially impede movement of water out forwards
between the inlet elements, and in that there are energy
absorbing means 7 between the inlet elements and the
backing.

2.    The inhibitor of Claim 1, wherein the inlet elements
8 are substantially triangular in cross-section.

3.    The inhibitor of Claim 2, wherein the inlet side or
apex of the triangle has an angle of roughly half a
right angle.

4.    The inhibitor of Claim 1 or 3, wherein the rear

18

sides of the inlet elements 8 are substantially flat.

5. The inhibitor of any one of Claims 1 to 3, wherein the rear sides of the inlet elements 8 are substantially parallel to the plane of the inlet layer 6.

6. The inhibitor of any one of the preceding Claims, wherein the maximum width, as seen in cross-section, of each of the inlet elements 8 is substantially at the rear side of the inlet element.

7. The inhibitor of any one of the preceding Claims, wherein each inlet element 8 is arranged to extend in a plane normal to the axis of the wheel 1.

8. The inhibitor of any one of the preceding Claims, wherein the gap between two adjacent inlet elements 8 is approximately equal to the maximum width of the inlet elements, as seen in cross-section.

9. The inhibitor of any one of the preceding Claims, wherein the gap between two adjacent inlet elements 8 is 2 to 10 mm.

10. The inhibitor of any one of the preceding Claims, wherein the gap between two adjacent inlet elements 8 is not more than 7 mm.

11. The inhibitor of any one of Claims 1 to 8, wherein the gap between two adjacent inlet elements 8 is about 3 or 3.5 mm.

12. The inhibitor of any one of Claims 1 to 8, wherein the gap between two adjacent inlet elements 8 is about 6 mm.

13. The inhibitor of any one of the preceding Claims, wherein the inlet elements 8 are of plastics material and have been formed by integral extrusion as a mesh structure which includes elements 9 interconnecting the inlet elements.

14. The inhibitor of any one of the preceding Claims, wherein the energy absorbing means 7 is formed of two sets of parallel elements 10,11 which cross each other at a substantial angle and whose middle lines lie in spaced parallel planes.

15. The inhibitor of Claim 14, wherein the sets of parallel elements 10,11 of the energy absorbing means 7 are of plastics material formed by integral extrusion as a bi-planar mesh structure.

16. The inhibitor of any one of the preceding Claims, wherein there is, between the inlet layer 6 and the backing 3, a space (12) not occupied by the energy absorbing means 7.

17. The inhibitor of Claim 16, wherein said space (12) is between the energy absorbing means 7 and the backing means 3, the energy absorbing means being directly behind the inlet layer 6.

18. The inhibitor of any one of the preceding Claims, wherein the backing 3 is associated with drainage means in the form of elements 10,11 or 13 which are inclined to the vertical and to the horizontal, for causing the water to move sideways and downwards as it drains down the backing.

19. The inhibitor of Claim 18, wherein the elements are ribs 13 on the backing 3, there being two sets of ribs meeting in a vertical plane, each set being inclined downwards and outwards towards the respective side of the backing.

20. A vehicle, _characterised in that_ it has the inhibitor of any one of the preceding Claims attached thereto adjacent a wheel thereof.

FIG.1.

FIG.2.

0112694

2-3

FIG.3.

FIG.4b.

FIG.4a.

FIG.5

FIG.6.

FIG.7.

0112694

3-3

FIG.8.

FIG.9.

FIG.10.

FIG.11.

| | European Patent Office | **EUROPEAN SEARCH REPORT** | Application number |
|---|---|---|---|
| | | | EP 83 30 7631 |

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | US-A-4 290 619   (GOODALL)<br>* Figures 1-15 * | 1-3,4 | B 62 D   25/18 |
| A | GB-A-2 078 181   (BOYDELL & JACKS)<br>* Figures 1-12 * | 1 | |
| A | DE-B-1 505 251   (LAUSTSEN)<br>* Figures 1,2 * | 1,4,13 | |
| P,A | US-A-4 382 606   (LIGHTLE et al.)<br><br>* Figures 5-14 * | 1,4,13,19 | |
| D,P<br>A | GB-A-2 100 206   (BUCKLEY) | | |
| D,A | DE-U-6 606 116   (SAMER) | | TECHNICAL FIELDS SEARCHED (Int. Cl. ³)<br><br>B 62 D   25/00 |

The present search report has been drawn up for all claims

| Place of search<br>BERLIN | Date of completion of the search<br>21-02-1984 | Examiner<br>LUDWIG H J |
|---|---|---|